# EUROPÄISCHE PATENTSCHRIFT

(11) **EP 0 733 533 B1**
(45) Veröffentlichungstag und Bekanntmachung des Hinweises auf die Patenterteilung: **11.11.1998**
(21) Anmeldenummer: 96104397.3
(22) Anmeldetag: 20.03.1996
(51) Int. Cl.: B61D 19/00, B60J 7/06

(54) **Schienengebundener Güterwagen**
Track-bound freight car
Wagon à marchandises sur rails

(30) Priorität: 24.03.1995 AT 530/95
(43) Veröffentlichungstag der Anmeldung: 25.09.1996
(73) Patentinhaber: Integral Verkehrstechnik Aktiengesellschaft, 6200 Jenbach (AT)
(72) Erfinder: Sommerer, Rudolf, 6200 Jenbach (AT)
(74) Vertreter: Torggler, Paul, Dr.

(56) Entgegenhaltungen:
- EP-A- 0 308 607
- GB-A- 2 041 839
- US-A- 3 836 769

## Beschreibung

Die Erfindung betrifft einen schienengebundenen Güterwagen mit mindestens einer Ladeöffnung in der seitlichen Bordwand und mindestens einer Ladeetage, wobei die Ladenöffnung über einen hochziehbaren und aufwickelbaren Rolladenvorhang verschließbar ist und weiters mindestens ein seitlich sich im wesentlichen quer über die Ladeöffnung erstreckender, starrer Bordwandabschnitt vorgesehen ist.

Ein derartiger Güterwagen ist aus der EP-A-0 308 607 bekannt. Der in dieser Druckschrift gezeigte Bordwandabschnitt - streng genommen handelt es sich eigentlich um einen Dachabschnitt - ist um eine in Längsrichtung des Güterwagens verlaufende Achse schwenkbar. An diesem Bordwandabschnitt schließt eine flexible, zusammenraffbare Seitenwand an, die durch den Bordwandabschnitt und zusammen mit diesem hochgeschwenkt werden kann. Diese bekannte Konstruktion weist einerseits den Nachteil auf, daß im Güterwagen gelagerte Güter lediglich durch die flexible, kaum biegestabile Seitenwand gegen seitliches Herausrutschen aus dem Güterwagen (z. B. bei Kurvenfahrt) gesichert sind. Weiters verringert die in die Ladeöffnung ragende zusammengeraffte Seitenwand bei nicht hochgeschwenktem Bordwandabschnitt die Größe dieser Ladeöffnung, was sich beim Be- und Entladen nachteilig auswirkt.

Die Erfindung schlägt zur Lösung dieser Probleme vor, daß der (die) starren Bordwandabschnitt(e) in links und rechts der Ladeöffnung angeordneten, zumindest im unteren Bereich im wesentlichen vertikalen Bordwandführungen höhenverstellbar gelagert ist (sind), wobei der (die) Bordwandabschnitt(e) bei herabgelassenem Rolladenvorhang auf der Höhe der Ladeetage(n) liegt (liegen) und beim Hochziehen des Rolladenvorhangs mittels eines Aufziehmechanismus vom Rolladenvorhang nach oben mitgenommen wird (werden).

Aufgrund dieser Maßnahme ist es möglich, den Rolladenvorhang relativ leicht und dünn auszubilden, da in den entscheidenden Bereichen auf der Höhe der Ladeetagen die Bordwandabschnitte die notwendige Stabilität gewahrleisten.

Der Rolladenvorhang kann im einfachsten Fall eine hochziehbare flexible Plane sein. Es ist aber auch möglich, daß der Rolladenvorhang mehrere gelenkig miteinander verbundene längliche Rolladenelemente aufweist. In jedem Fall laßt sich der Rolladenvorhang mit einem einfachen Aufziehmechanismus, der vorzugsweise im Dachbereich des Güterwagens angeordnet ist, hochziehen. Im allgemeinen wird dieser Aufziehmechanismus eine motorisch angetriebene Wickelwelle haben, auf der der Rolladenvorhang aufwickelbar ist.

Mit einem solchen Rolladenvorhang lassen sich auch große Öffnungen rasch und einfach öffnen bzw. verschließen. Da der Rolladenvorhang im hochgezogenen, aufgewickelten Zustand nur wenig Platz einnimmt, laßt sich praktisch die gesamte Seite des Güterwagens bis auf statisch nötige Portale öffnen und damit eine rasche Be- und Entladung vornehmen. Günstigerweise wird man die Öffnungen auf beiden Seiten des Güterwagens vorsehen.

Weitere Vorteile und Einzelheiten der Erfindung werden anhand der nachfolgenden Figurenbeschreibung näher erläutert:

Es zeigt:
- Fig. 1: ein Ausführungsbeispiel eines schienengebundenen Güterwagens gemäß der Erfindung in einer Seitenansicht bei geöffneten Ladeöffnungen,
- Fig. 2a: einen schematischen Querschnitt durch ein Ausführungsbeispiel eines erfindungsgemäßen Güterwagens mit rechts herabgelassenem Rolladenvorhang und links hochgezogenem Rolladenvorhang,
- Fig. 2b: die linke Seite der Fig. 2a mit ausgeschwenkten Führungen für den Rolladenvorhang und die hochgezogenen Bordwandabschnitte,
- Fig. 3: einen Schnitt gemäß der Linie A-A der Fig. 2a,
- Fig. 4: einen Schnitt gemäß der Linie B-B der Fig. 2a,
- Fig. 5: einen Schnitt gemäß der Linie C-C der Fig. 2a,
- Fig. 6: schematisch Fixiereinrichtungen zum Fixieren von Haltedornen, die an den Bordwandabschnitten ausgebildet sind.

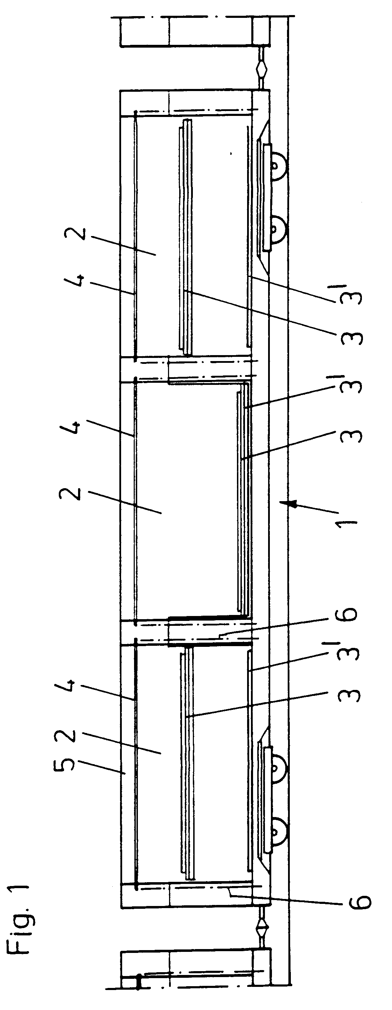

Der in Fig. 1 dargestellte schienengebundene Güterwagen weist auf jeder Seite drei große Ladeöffnungen 2 auf.

Im Inneren des Güterwagens gibt es eine obere höhenverstellbare Ladeetage 3 und eine untere Ladeetage 3'. Die obere Ladeetage kann beispielsweise mittels eines elektrischen oder pneumatischen Hubspindelantriebes in der Höhe verstellt werden und aus einem Leichtwerkstoff wie beispielsweise Aluminium oder faserverstärktem duroplastischem Kunststoff in einer Honigwaben- oder Sandwichstruktur bestehen. Bei dem in Fig. 1 dargestellten Ausführungsbeispiel sind die Rolladenvorhänge 4 bei allen drei Öffnungen bis in den Dachbereich hochgezogen und geben damit große Ladeöffnungen zum raschen Be- und Entladen frei.

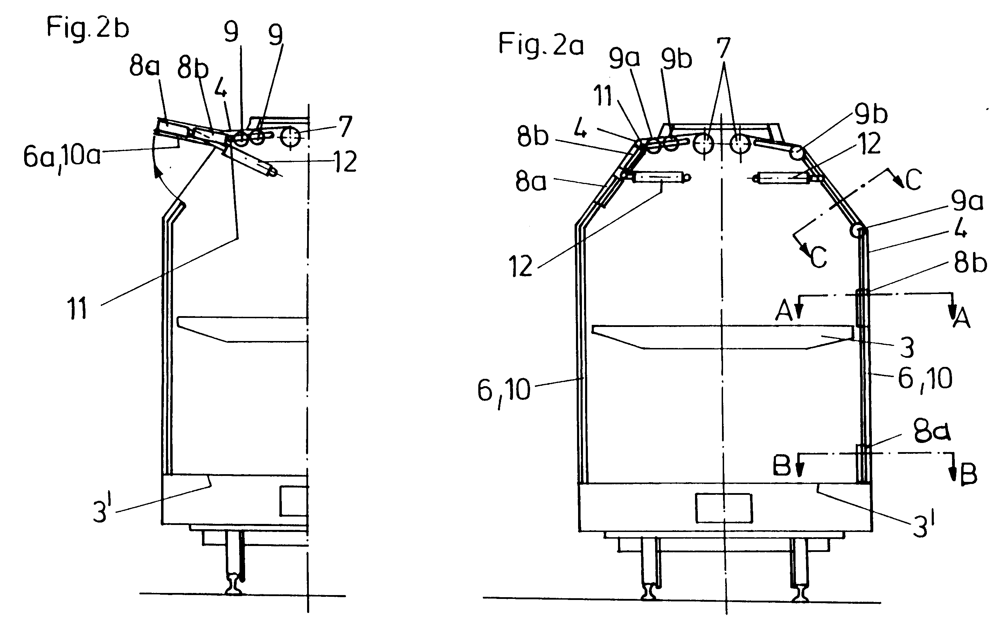

Die Rolladenvorhänge 4 sind links und rechts der Ladeöffnung 2 jeweils in seitlichen Führungen 6 geführt. Dies erlaubt ein sauberes mechanisches Betätigen und ein dichtes Abschließen im geschlossenen Zustand. Der Aufziehmechanismus für den Rolladenvorhang 4 ist unterhalb des Daches 5 angeordnet und daher in Fig. 1 nicht sichtbar. Aus Fig. 2a und 2b ist aber ersichtlich, daß dieser Aufziehmechanismus im wesentlichen aus einer Wickelwelle 7 besteht, die von einem nicht dargestellten Motor beispielsweise elektrisch oder pneumatisch angetrieben sein kann.

Bei dem in Fig. 2a dargestellten Ausführungsbeispiel besteht der Rolladenvorhang aus einer hochziehbaren flexiblen Plane. Die Hauptaufgabe des Rolladenvorhanges besteht darin, die Ladeöffnung 2 einerseits zu verschließen und andererseits zum Be- und Entladen möglichst weit zu öffnen. Bei dem in den Fig. 2a und 2b dargestellten Ausführungsbeispiel kann der Rolladenvorhang 4 aber zusätzlich noch die seitlichen Bordwandabschnitte 8a und 8b, sowie die beiden Unterstützungen 9a und 9b, welche allesamt links und rechts der Ladeöffnung 2 in Bordwandführungen 10 gelagert sind, mit nach oben ziehen, um so eine möglichst freie Zugänglichkeit zum Laderaum zu haben.

In dem in Fig. 2a rechts dargestellten Zustand ist der Rolladenvorhang 4 herabgelassen. Es befindet sich der untere Bordwandabschnitt 8a neben der unteren Ladeetage 3' und sichert dort aufgestellte nicht dargestellte Güter gegen ein Herausrutschen aus den Güterwagen. In ähnlicher Weise befindet sich der Bordwandabschnitt 8b auf der Höhe der oberen Ladeetage 3. Die beiden Unterstützungen 9a und 9b können beispielsweise runde Röhren sein, die sich in Wagenlängsrichtung erstrecken und links und rechts der Ladeöffnung hochziehbar in den Bordwandführungen geführt sind. Über diese Unterstützungen 9a und 9b ist der als Plane ausgeführte Rolladenvorhang 4 außen darübergelegt. Beim Betätigen des Aufziehmechanismus 7 wird der Rolladenvorhang 4 hochgezogen und nimmt damit den unten daran befestigten Bordwandabschnitt 8a mit nach oben. Beim weiteren Hochziehen nimmt dieser Bordwandabschnitt 8a den Bordwandabschnitt 8b mit nach oben und in der Folge auch die beiden Unterstützungen 9a und 9b bis die in Fig. 2a links dargestellte Lage erreicht ist. Um die Zugänglichkeit des oberen Laderaums noch weiter zu verbessern, sind die oberen Abschnitte 6a bzw. 10a der seitlichen Führungen für den Rolladenvorhang 4 bzw. der Bordwandführungen 10 schwenkbar am Güterwagen gelagert und über einen Schwenkantrieb (beispielsweise Pneumatikzylinder) gemeinsam mit den darin befindlichen Bordwandabschnitten 8a und 8b, sowie gegebenenfalls den Unterstützungen 9a und 9b nach oben ausschwenkbar, wie dies in Fig. 2b gezeigt ist. Damit ist auch der obere Laderaum vollkommen frei zugänglich.

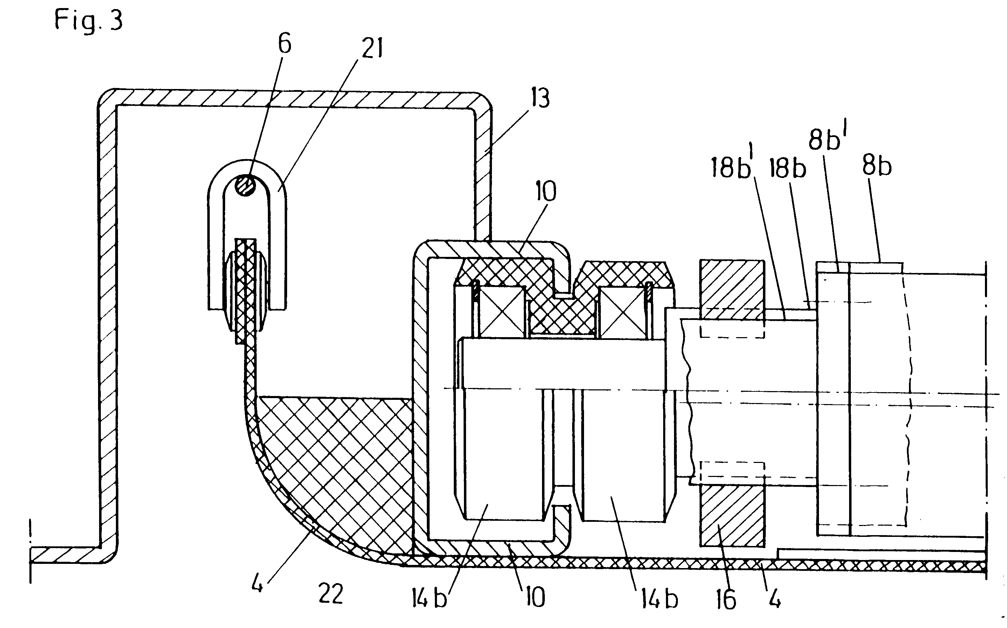

Zu den Führungen 6 für den Rolladenvorhang und den Bordwandführungen 10 für die Bordwandabschnitte 8a und 8b bzw. die Unterstützungen 9a und 9b ist zu erwähnen, daß diese grundsätzlich zusammenfallen können, daß also für den Rolladenvorhang 4 und die Bordwände 8a und 8b dieselbe Führung vorgesehen ist. Es ist aber auch möglich, gesonderte Führungen vorzusehen, wie dies bei den Ausführungsbeispielen gemäß Fig. 3 bis 5 gezeigt ist. In der Praxis wird es günstig sein, sowohl die seitlichen Führungen 6 wie die Bordwandführungen 10 im oberen Bereich gemeinsam um eine gemeinsame Schwenkachse schwenkbar zu lagern, wobei die Schwenkachse 11 günstigerweise in Fahrtrichtung des Güterwagens verläuft und im Dachbereich 5 desselben angeordnet ist. Der Schwenkantrieb 12 kann beispielsweise über Pneumatikzylinder erfolgen.

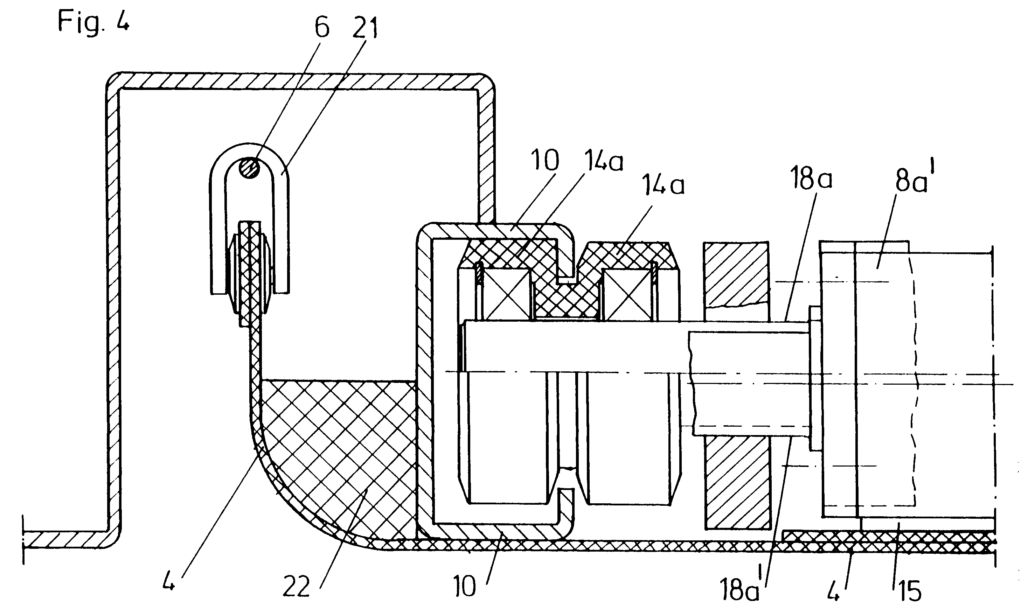

In Fig. 3 ist der rechte Bereich der Ladeöffnung 2 dargestellt. Am tragenden Portal 13 des Güterwagens ist als Bordwandführung 10 eine profilierte Laufschiene vorgesehen, in der am Bordwandabschnitt 8b gelagerte Rollen 14b laufen können. Dieser obere Bordwandabschnitt 8b ist im wesentlichen unabhängig vom Rolladenvorhang 4. Der obere Bordwandabschnitt 8b wird aber beim Hochziehen des Rolladenvorhanges vom unteren Bordwandabschnitt 8a mit nach oben genommen, der mit dem Rolladenvorhang unten verbunden ist, wie dies an der Stelle 15 in Fig. 4 dargestellt ist.

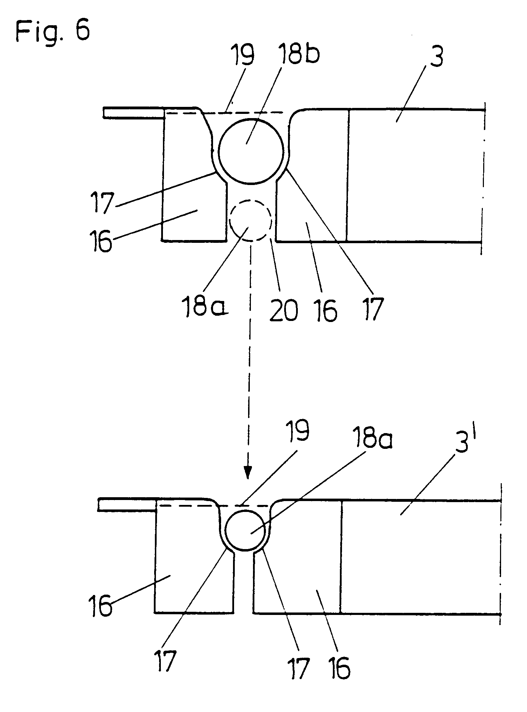

In Fig. 3 ist eine Fixiereinrichtung 16 dargestellt, die an der oberen Ladeetage 3 befestigt ist und zum Fixieren des oberen Abschnittes 8b an der Ladeetage 3 dient. Die Fixiereinrichtung 16 ist dabei beispielsweise so ausgebildet, wie dies in Fig.6 oben gezeigt ist. Sie weist nach unten zusammenlaufende Zentrierflächen 17 auf, an denen ein Haltedorn 18b anliegt, der am Bordwandabschnitt 8b ausgebildet ist. Bei dem in den Fig. 3 und 6 dargestellten Ausführungsbeispiel kann dieser Haltedorn 18b das Verbindungsstück zwischen dem Bordwandabschnitt 8b und dem Lager der Rollen 14b sein. Beim Herablassen des Rolladenvorhanges 4 und damit des Bordwandabschnites 8b dringt der Haltedorn 18b in die Fixiereinrichtung 16 ein und liegt dann satt in einer wohldefinierten Auflage an den Zentrierflächen 17 an. In dieser Lage kann nun darüber ein Halteelement 19 eingeschoben werden, welches in dieser Stellung den Haltedorn 18b nach oben gegen Abheben sichert.

In Fig. 3 ist mit dünnen Linien die Lage des Bordwandabschnittes 8b und des Haltedornes 18 b eingezeichnet, wenn die Rollen 14b am Laufprofil 10 anliegen. Die Zentrierflächen 17 an der Fixiereinrichtung 16 sind nun so ausgerichtet, daß sich die Lage des Haltedornes in die mit starken Linien in Fig. 3 eingezeichnete Lage 18b' bzw. für die Bordwand 8b' bewegt. Dieser geringe Versatz hat den Vorteil, daß in dieser Fixierstellung die Rollen 14b nicht an der Bordwandführung 10 anliegen und damit deren Lager bei der Fahrt geschont bleiben.

Aus Fig. 6 ist weiters ersichtlich, daß die Zentrierflächen 17 der oberen Zentriereinrichtung 16 unten mit Abstand voneinander enden und somit eine Durchtrittsöffnung 10 für einen schmäleren Haltedorn 18a des darunter liegenden Bordwandabschnittes 8a freigeben. Damit passiert beim Herablassen des Rolladenvorhanges 4 folgendes. Zunächst bleibt auf der Höhe der oberen Ladeetage 3 die obere Bordwand 8b mit ihrem Haltedorn 18b zwischen den Zentrierflächen 17 hängen und lediglich der untere Bordwandabschnitt 8a kann mit seinem Haltedorn 18a weiter nach unten fahren, bis er auf den Zentrierflächen 17 der in Fig. 6 unten dargestellten Fixiereinrichtung 18 der unteren Ladeetwage 3' einrastet.

Aus den Fig. 3 und 4 ist weiters ersichtlich, daß als seitliche Führung und Spanneinrichtung für den als Plane ausgebildeten Rolladenvorhang 4 ein gespanntes Seil 6 vorgesehen ist, das beispielsweise über ein Gewicht und/oder eine pneumatische Spanneinrichtung spannbar ist. An diesem Seil gleitet der Rolladenvorhang über Ösen 21. Die Umlenkung des Rolladenvorhanges 4 zum Seil 6 hin erfolgt über aus Kunststoff bestehende Gleitleisten 22.

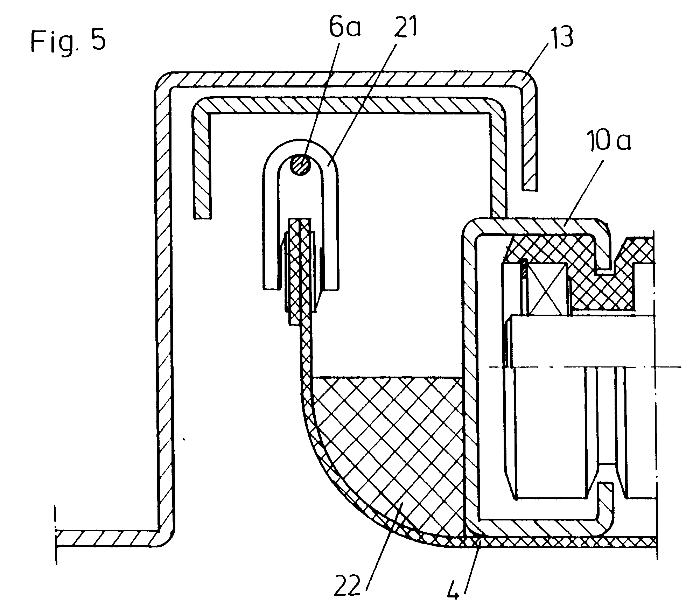

Die Fig. 5 zeigt den oberen Bereich des Güterwagens. Es ist ersichtlich, daß die Bordwandführung 10a und die Führung 6a für den Rolladenvorhang 4 unabhängig vom feststehenden Portal 13 des Güterwagens ausgebildet sind. Dies erlaubt ein Hochschwenken (seitliches Ausstellen) des oberen Bereiches der Führungen samt den darin liegenden Bordwandabschnitten bzw. Unterstützungen, wie dies beispielsweise in Fig. 2b gezeigt ist.

## Patentansprüche

1. Schienengebundener Güterwagen mit mindestens einer Ladeöffnung in der seitlichen Bordwand und mindestens einer Ladeetage (3, 3'), wobei die Ladenöffnung (2) über einen hochziehbaren und aufwickelbaren Rolladenvorhang (4) verschließbar ist und weiters mindestens ein seitlich sich im wesentlichen quer über die Ladeöffnung erstreckender, starrer Bordwandabschnitt (8a, 8b) vorgesehen ist, dadurch gekennzeichnet, daß der (die) starre(n) Bordwandabschnitt(e) (8a, 8b) in links und rechts der Ladeöffnung angeordneten, zumindest im unteren Bereich im wesentlichen vertikalen Bordwandführungen (10) höhenverstellbar gelagert ist (sind), wobei der (die) Bordwandabschnitt(e) (8a, 8b) bei herabgelassenem Rolladenvorhang (4) auf der Höhe der Ladeetage(n) (3, 3') liegt (liegen) und beim Hochziehen des Rolladenvorhangs (4) mittels eines Aufziehmechanismus (7) vom Rolladenvorhang nach oben mitgenommen wird (werden).

2. Güterwagen nach Anspruch 1, dadurch gekennzeichnet, daß der Rolladenvorhang (4) links und rechts der Ladeöffnung (2) in seitlichen Führungen (6) geführt ist.

3. Güterwagen nach Anspruch 2, dadurch gekennzeichnet, daß ein oberer Abschnitt (6a) der Führungen (6) schwenkbar am Güterwagen (1) gelagert ist, wobei vorzugsweise zumindest ein motorischer Schwenkantrieb (12) vorgesehen ist.

4. Güterwagen nach Anspruch 3, dadurch gekennzeichnet, daß die Schwenkachse (11) der Führungen (6) in Fahrtrichtung verläuft und vorzugsweise im Dachbereich (5) des Güterwagens (1) angeordnet ist.

5. Güterwagen nach einem der Ansprüche 2 bis 4, dadurch gekennzeichnet, daß die seitlichen Führungen vorzugsweise aus Kunststoff bestehende Gleitleisten aufweist, entlang der der Rolladenvorhang gleiten kann.

6. Güterwagen nach einem der Ansprüche 2 bis 5, dadurch gekennzeichnet, daß jede seitliche Führung ein vorzugsweise durch ein Gewicht gespanntes Seil (6) umfaßt, an dem der Rolladenvorhang über das Seil (6) umgreifende Ösen (21) geführt ist.

7. Güterwagen nach einem der Ansprüche 1 bis 6, dadurch gekennzeichnet, daß ein vorzugsweise motorisch angetriebener Aufziehmechanismus (7) für den Rolladenvorhang (4) im Dachbereich (5) des Güterwagens (1) angeordnet ist.

8. Güterwagen nach einem der Ansprüche 1 bis 7, dadurch gekennzeichnet, daß der Rolladenvorhang (4) eine hochziehbare flexible Plane ist.

9. Güterwagen nach einem der Ansprüche 1 bis 8, dadurch gekennzeichnet, daß der Rolladenvorhang mehrere gelenkig miteinander verbundene, längliche Rolladenelemente aufweist.

10. Güterwagen nach einem der Ansprüche 1 bis 9, dadurch gekennzeichnet, daß die Bordwandführungen (10) als profilierte Laufschienen für am Bordwandabschnitt (8a,8b) gelagerte Rollen (14a,14b) ausgebildet sind.

11. Güterwagen nach einem der Ansprüche 1 bis 10, dadurch gekennzeichnet, daß in den Bordwandführungen (10) einer Ladeöffnung (2) zumindest zwei übereinanderliegende, unabhängige Bordwandabschnitte (8a,8b) und vorzugsweise zumindest eine sich zwischen den beiden Bordwandführungen (10) erstreckende Unterstützung (9a,9b) für den Rolladenvorhang (4) geführt sind.

12. Güterwagen nach Anspruch 11, dadurch gekennzeichnet, daß der Rolladenvorhang (4) mit dem untersten Bordwandabschnitt (8a) verbunden ist und dieser beim Hochziehen des Rolladenvorhanges (4) die darüberliegende, in den Bordwandführungen geführten Teile (Bordwandabschnitt 8b,, Unterstützungen 9a,9b)) nach oben mitnimmt.

13. Güterwagen nach einem der Ansprüche 1 bis 12, dadurch gekennzeichnet, daß ein oberer Abschnitt (10a) der Bordwandführung, vorzugsweise gemeinsam mit der Führung (6) für den Rolladenvorhang (4), schwenkbar am Güterwagen (1) gelagert sind, wobei vorzugsweise zumindest ein motorischer Schwenkantrieb (12) vorgesehen ist.

14. Güterwagen nach einem der Ansprüche 1 bis 13, dadurch gekennzeichnet, daß die Bordwandabschnitte (8a,8b) aus Leichtmetall oder faserverstärktem duroplastischem Kunststoff bestehen und vorzugsweise in Honigwaben- oder Sandwichstruktur aufgebaut sind.

15. Güterwagen nach einem der Ansprüche 1 bis 14, dadurch gekennzeichnet, daß an der oder den Ladeetagen (3',3) des Güterwagens Fixiereinrichtungen (16) zum lösbaren Fixieren eines Bordwandabschnittes (8a,8b) an der jeweiligen Ladeetage (3',3) vorgesehen sind.

16. Güterwagen nach Anspruch 15, dadurch gekennzeichnet, daß zumindest eine Fixiereinrichtung (16) nach unten zusammenlaufende Zentrierflächen (17) für einen Haltedorn (18a,18b) am Bordwandabschnitt (8a,8b) aufweist.

17. Güterwagen nach Anspruch 16, dadurch gekennzeichnet, daß die Zentrierflächen (17) unten mit Abstand voneinander enden und somit eine Durchtrittsöffnung (20) für einen schmäleren Haltedorn (18a) eines darunterliegenden Bordwandabschnitts (8a) freigeben.

18. Güterwagen nach Anspruch 16 oder Anspruch 17, dadurch gekennzeichnet, daß die Fixiereinrichtung (16) ein bewegbares Halteelement (19) aufweist, das in einer ersten Stellung den auf den Zentrierflächen (17) aufliegenden Haltedorn (18b) gegen Abheben sichert und in einer zweiten Stellung nach oben freigibt.

19. Güterwagen nach einem der Ansprüche 1 bis 18, dadurch gekennzeichnet, daß im Güterwagen (1) zumindest eine höhenverstellbar gelagerte Ladeetage (3) vorgesehen ist und ein mit dem Rolladenvorhang (4) hochziehbarer Bordwandabschnitt (8b) beim Herablassen des Rolladenvorhanges (4) auf der gerade eingestellten Höhe der Ladeetage (3) stehenbleibt.

## Claims

1. A rail-mounted goods waggon having at least one loading opening in the lateral wall and at least one load deck (3, 3'), wherein the loading opening (2) is closable by way of a roller shutter (4) which can be raised and wound up, and there is further provided at least one rigid wall portion (8a, 8b) extending laterally substantially transversely over the loading opening, characterised in that the rigid wall portion or portions (8a, 8b) is or are mounted displaceably in respect of height in wall guides (10) which are arranged to the left and to the right of the loading opening and which are substantially vertical at least in the lower region, wherein when the roller shutter (4) is let down the wall portion or portions (8a, 8b) lies or lie at the level of the load deck or decks (3, 3') and when the roller shutter (4) is raised by means of a lifting mechanism (7) the wall portion or portions is or are entrained upwardly by the roller shutter.

2. A goods waggon according to claim 1 characterised in that the roller shutter (4) is guided to the left and the right of the loading opening (2) in lateral guides (6).

3. A goods waggon according to claim 2 characterised in that an upper portion (6a) of the guides (6) is mounted pivotably on the goods waggon (1), wherein there is preferably provided at least one motor pivotal drive (12).

4. A goods waggon according to claim 3 characterised in that the pivot axis (11) of the guides (6) extends in the direction of travel and is preferably arranged in the roof region (5) of the goods waggon (1).

5. A goods waggon according to one of claims 2 to 4 characterised in that the lateral guides preferably have sliding bars comprising plastics material, along which the roller shutter can slide.

6. A goods waggon according to one of claims 2 to 5 characterised in that each lateral guide includes a cable (6) which is preferably tensioned by a weight and on which the roller shutter is guided by way of eyes (21) embracing the cable (6).

7. A goods waggon according to one of claims 1 to 6 characterised in that a preferably motor-driven lifting mechanism (7) for the roller shutter (4) is arranged in the roof region (5) of the goods waggon (1).

8. A goods waggon according to one of claims 1 to 7 characterised in that the roller shutter (4) is a liftable flexible tarpaulin.

9. A goods waggon according to one of claims 1 to 8 characterised in that the roller shutter has a plurality of elongate roller shutter elements which are hingedly connected together.

10. A goods waggon according to one of claims 1 to 9 characterised in that the wall guides (10) are in the form of profiled rails for rollers (14a, 14b) mounted on the wall portion (8a, 8b).

11. A goods waggon according to one of claims 1 to 10 characterised in that guided in the wall guides (10) of a loading opening (2) are at least two mutually superposed independent wall portions (8a, 8b) and preferably at least one support (9a, 9b) for the roller shutter (4), the support extending between the two wall guides (10).

12. A goods waggon according to claim 11 characterised in that the roller shutter (4) is connected to the lowermost wall portion (8a) and when the roller shutter (4) is raised the lowermost wall portion entrains upwardly the parts (wall portion 8b, supports 9a, 9b) which are disposed above that lowermost wall portion and which are guided in the wall guides.

13. A goods waggon according to one of claims 1 to 12 characterised in that an upper portion (10a) of the wall guide, preferably jointly with the guide (6) for the roller shutter (4), are mounted pivotably on the goods waggon (1), wherein there is preferably provided at least one motor pivoting drive (12).

14. A goods waggon according to one of claims 1 to 13 characterised in that the wall portions (8a, 8b) comprise light metal or alloy or fibre-reinforced thermosetting plastics material and are preferably constructed using a honeycomb or sandwich structure.

15. A goods waggon according to one of claims 1 to 14 characterised in that provided on the load deck or decks (3', 3) of the goods waggon are fixing devices (16) for releasably fixing a wall portion (8a, 8b) to the respective load deck (3', 3).

16. A goods waggon according to claim 15 characterised in that at least one fixing device (16) has downwardly convergent centering surfaces (17) for a holding bar (18a, 18b) on the wall portion (8a, 8b).

17. A goods waggon according to claim 16 characterised in that the centering surfaces (17) terminate at a spacing from each other at the bottom and thus provide an opening (20) for the passage therethrough of a narrower holding bar (18a) of a subjacent wall portion (8a).

18. A goods waggon according to claim 16 or claim 17 characterised in that the fixing device (16) has a movable holding element (19) which in a first position secures the holding bar (18b) which lies on the centering surfaces (17) to prevent it from lifting of and which in a second position releases it upwardly.

19. A goods waggon according to one of claims 1 to 18 characterised in that at least one load deck (3) which is mounted adjustably in respect of height is provided in the goods waggon (1) and when the roller shutter (4) is let down a wall portion (8b) which can be raised with the roller shutter (4) stops at the height which is just set of the load deck (3).

## Revendications

1. Wagon de marchandises sur rails comprenant au moins une ouverture de chargement dans la ridelle latérale et au moins un niveau de chargement (3, 3'), l'ouverture de chargement (2) pouvant être fermée par un volet roulant (4) susceptible d'être relevé et enroulé et, de plus, au moins une section de ridelle (8a, 8b) rigide étant prévue sur le côté et s'étendant sensiblement en transversal au-dessus de l'ouverture de chargement, caractérisé en ce que la (les) section(s) de ridelle (8a, 8b) rigide(s) est (sont) disposée(s) de manière à pouvoir régler sa (leur) hauteur dans des glissières de ridelle (10), montées à gauche et à droite de l'ouverture de chargement et sensiblement verticales au moins dans la zone inférieure, la (les) section(s) de ridelle (8a, 8b) étant située(s) à la hauteur des niveaux de chargement (3, 3') lorsque le volet roulant (4) est abaissé et étant entraînée(s) vers le haut avec le volet roulant par l'intermédiaire d'un mécanisme de relèvement (7) pendant le relèvement du volet roulant (4).

2. Wagon de marchandises selon la revendication 1, caractérisé en ce que le volet roulant (4) est guidé dans des glissières de guidage (6) latérales, montées à gauche et à droite de l'ouverture de chargement (2).

3. Wagon de marchandises selon la revendication 2, caractérisé en ce qu'un tronçon supérieur (6a) des glissières de guidage (6) est monté sur le wagon de marchandises (1) de manière à pouvoir pivoter, de préférence au moins un système de pivotement (12) actionné par moteur étant prévu.

4. Wagon de marchandises selon la revendication 3, caractérisé en ce que l'axe de pivotement (11) des glissières de guidage (6) est orienté dans le sens de déplacement et, de préférence, dans la zone du plafond (5) du wagon de marchandises (1).

5. Wagon de marchandises selon l'une quelconque des revendications 2 à 4, caractérisé en ce que les glissières de guidage latérales sont munies de barres de guidage, réalisées de préférence en matière plastique, le long desquelles peut coulisser le volet roulant.

6. Wagon de marchandises selon l'une quelconque des revendications 2 à 5, caractérisé en ce que chaque glissière de guidage latérale comprend un câble (6) tendu de préférence par un poids, contre lequel câble le volet roulant est guidé par l'intermédiaire de boucles (21) qui s'engagent autour du câble (6).

7. Wagon de marchandises selon l'une quelconque des revendications 1 à 6, caractérisé en ce qu'un mécanisme de relèvement (7) actionné de préférence par un moteur et destiné au volet roulant (4) est monté dans la zone du plafond (5) du wagon de marchandises (1).

8. Wagon de marchandises selon l'une quelconque des revendications 1 à 7, caractérisé en ce que le volet roulant (4) est une surface plane flexible qui peut être relevée.

9. Wagon de marchandises selon l'une quelconque des revendications 1 à 8, caractérisé en ce que le volet roulant comporte plusieurs éléments de volet longitudinaux, reliés entre eux de manière articulée.

10. Wagon de marchandises selon l'une quelconque des revendications 1 à 9, caractérisé en ce que les glissières de ridelle (10) sont conçues comme des rails de roulement profilés pour des galets (14a, 14b) montés sur la section de ridelle (8a, 8b).

11. Wagon de marchandises selon l'une quelconque des revendications 1 à 10, caractérisé en ce qu'au moins deux sections de ridelle (8a, 8b) indépendantes, situées l'une au-dessus de l'autre, et de préférence au moins un support (9a, 9b), s'étendant entre les deux glissières de ridelle (10), sont guidés dans les glissières de ridelle (10) d'une ouverture de chargement (2).

12. Wagon de marchandises selon la revendication 11, caractérisé en ce que le volet roulant (4) est assemblé avec la section de ridelle inférieure (8a) et, pendant le relèvement du volet roulant (4), celle-ci entraîne vers le haut les pièces (section de ridelle 8b, supports 9a, 9b) situées au-dessus d'elle et guidées dans les glissières de ridelle.

13. Wagon de marchandises selon l'une quelconque des revendications 1 à 12, caractérisé en ce qu'un tronçon supérieur (10a) de la glissière de ridelle, de préférence conjointement avec la glissière de guidage (6) destinée au volet roulant (4), sont montés sur le wagon de marchandises (1) de manière à pouvoir pivoter, de préférence au moins un système de pivotement (12) actionné par moteur étant prévu.

14. Wagon de marchandises selon l'une quelconque des revendications 1 à 13, caractérisé en ce que les sections de ridelle (8a, 8b) sont réalisées en métal léger ou dans une matière synthétique thermodurcissable renforcée par fibres et sont conçues de préférence selon une structure en nids d'abeille ou une structure en sandwich.

15. Wagon de marchandises selon l'une quelconque des revendications 1 à 14, caractérisé en ce qu'il est prévu de monter, sur le(s) niveaux de chargement (3', 3) du wagon de marchandises, des dispositifs de fixation (16) pour fixer de manière amovible une section de ridelle (8a, 8b) sur le niveau de chargement (3', 3) concerné.

16. Wagon de marchandises selon la revendication 15, caractérisé en ce qu'au moins un élément de fixation (16) présente des surfaces de centrage (17), convergeant vers le bas, destinées à une broche de support (18a, 18b) montée sur la section de ridelle (8a, 8b).

17. Wagon de marchandises selon la revendication 16, caractérisé en ce que les surfaces de centrage (17) se terminent dans le bas à une distance donnée l'une de l'autre et libèrent ainsi un passage (20) pour une broche de support (18a) plus étroite d'une section de ridelle (8a) située au-dessous.

18. Wagon de marchandises selon la revendication 16 ou 17, caractérisé en ce que le dispositif de fixation (16) comporte un élément de support (19) mobile qui, dans une première position, empêche le soulèvement de la broche de support (18b) reposant sur les surfaces de centrage (17) et, dans une deuxième position, libère ladite broche vers le haut.

19. Wagon de marchandises selon l'une quelconque des revendications 1 à 18, caractérisé en ce que, dans le wagon de marchandises (1), il est prévu au moins un niveau de chargement (3), monté de manière à pouvoir régler sa hauteur, et une section de ridelle (8b), susceptible d'être relevée avec le volet roulant (4), est immobilisée, lors de l'abaissement du volet roulant (4), au niveau de la hauteur qui vient d'être réglée pour le niveau de chargement (3).
